Europäisches Patentamt

European Patent Office

Office européen des brevets

(11) Publication number: **0 208 409**
**A1**

# (12) EUROPEAN PATENT APPLICATION

(21) Application number: 86304201.6

(22) Date of filing: 03.06.86

(51) Int. Cl.⁴: **C10G 11/05**

(30) Priority: 05.06.85 US 741505
05.06.85 US 741506

(43) Date of publication of application:
**14.01.87 Bulletin 87/03**

(84) Designated Contracting States:
**BE DE FR GB IT NL**

(71) Applicant: **MOBIL OIL CORPORATION**
**150 East 42nd Street**
**New York New York 10017(US)**

(72) Inventor: **Herbst, Joseph Anthony**
**60 Bryant Road**
**Turnersville New Jersey 08012(US)**
Inventor: **Dwyer, Francis Gérard**
**1128 Talleyrand Road**
**West Chester Pennsylvania 19380(US)**
Inventor: **Huss, Albin, Jr.**
**51 Stirling Way**
**Chadds Ford Pennsylvania 19317(US)**

(74) Representative: **West, Alan Harry**
**Mobil Court 3 Clements Inn**
**London WC2A 2EB(GB)**

(54) **Cracking with molecular sieves containing aluminium, phosphorus and silicon.**

(57) There is provided a process for cracking gas oils and heavier hydrocarbons with molecular sieve catalysts which contain aluminum, phosphorus and silicon, preferably having a faujasite-type crystalline structure. Such molecular sieves may be prepared by the method for making SAPO-37 as described in the Lok et al U.S. Patent No. 4,440,871. These molecular sieves may be used alone or as additives to other catalysts for octane improvement in the cracking of gas oils to produce a product stream including gasoline.

## CRACKING WITH MOLECULAR SIEVES CONTAINING ALUMINUM, PHOSPHORUS AND SILICON

This invention relates to cracking reactions with molecular sieve catalysts which contain aluminum, phosphorus and silicon.

The Lok et al U.S. Patent No. 4,440,871, describes various molecular sieves which contain aluminum, phosphorus and silicon. These molecular sieves of the Lok et al patent are termed silicoaluminophosphates and are prepared by crystallizing various sources of $Al_2O_3$, $P_2O_5$ and $SiO_2$. One such silicoalumino-phosphate described in the Lok et al patent is termed SAPO-37. This SAPO-37 has a characteristic X-ray powder diffraction pattern in Table XV reproduced herein:

### TABLE XV

| 2 Theta | d spacing (Angstroms) | Relative Intensity |
|---|---|---|
| 6.1 – 6.3 | 14.49 – 14.03 | vs |
| 15.5 – 15.7 | 5.72 – 5.64 | w–m |
| 18.5 – 18.8 | 4.80 – 4.72 | w–m |
| 23.5 – 23.7 | 3.79 – 3.75 | w–m |
| 26.9 – 27.1 | 3.31 – 3.29 | w–m |

The X-ray diffraction patterns for SAPO-37 given in the Lok et al patent correspond to the crystalline structure of faujasite.

The Pine U.S. Patent No. 4,504,382 describes the modification of zeolite Y with dihydrogen phosphate or dihydrogen phosphite anions. The resulting phosphorus-containing zeolite Y is said to result in greater cracking activity resulting in a naphtha with an octane number about as high as that obtained with comparative zeolite Y which was not modified with phosphorus. Note column 8, lines 1-17 of the Pine patent.

The Chester et al U.S. Patent Nos. 4,309,279, 4,368,114 and 4,416,765 describe the addition of various additive catalysts to different cracking catalysts. The additive catalysts result in an improvement in octane number.

The present invention provides a process for catalytic cracking of hydrocarbons having a boiling range within the range of 232 to 760°C at a temperature of 300°C to 700°C, a pressure of from 0.1 atmosphere to 30 atmospheres and a weight hourly space velocity of from 0.1 to 100 using a cracking catalyst to produce a product stream comprising gasoline characterized by use of a catalyst of a microporous, crystalline material having a faujasite-type crystalline structure, said molecular sieve being prepared by crystallizing sources of $Al_2O_3$, $P_2O_5$ and $SiO_2$.

In other embodiments, the catalyst used is a system of at least the above molecular sieve and a conventional catalytic cracking component.

The molecular sieves used in accordance with the present invention may be prepared by methods for making SAPO-37 as described in Lok et al U.S. Patent No. 4,440,871. These molecular sieves may contain at least 1 percent Al atoms, at least 1 percent P atoms and at least 1 percent Si atoms, based upon the total number of Al, P and Si atoms in the molecular sieve. The number of Al atoms in the molecular sieve may exceed the number of Si atoms in the molecular sieve, and the number of P atoms in the molecular sieve may exceed the number of Si atoms in the molecular sieve.

The optional conventional catalytic cracking component may be molecular sieves with a faujasite-type structure. Various synthetic zeolites such as zeolite X and zeolite Y, which are prepared by cocrystallizing $SiO_2$ and $Al_2O_3$ under appropriate conditions, have a faujasite structure. The structures of these materials may be modified in minor fashions, e.g., to enhance their catalytic properties, by a number of physical and chemical treatments such as by calcination, steaming and dealumination. Faujasite-type structures as used herein means the range of structures produced when synthetic faujasites are subjected to the various physical and chemical treatments which do not degrade and may enhance their catalytic properties.

In addition to faujasite-type structures, the optional catalyst may have other structures, which are sufficiently porous to permit sorption of large molecules in a manner analogous to faujasite. One such structure is described in U.S. Application Serial No. 642,967.

Examples of structures which are capable of sorbing large molecules include those with pore windows formed with 10 or 12 membered rings of atoms. In addition to the structure of SAPO-37, the structures of SAPO-5, SAPO-11 and SAPO-40, which are discussed in the aforementioned Lok et al U.S. Patent No. 4,440,871, has structures with pore windows formed with 10 or 12 membered rings of atoms.

It may be possible to replace the silicon, phosphorus and aluminum portions of the molecular sieves discussed above, in whole or in part, with functionally equivalent elements. For example, in the field of zeolites containing silicon and aluminum, it has been found that the silicon portion thereof may be replaced with, e.g., germanium, and the aluminum portion thereof may be replaced with iron, chromium, vanadium, molybdenum, arsenic, antimony, manganese, gallium or boron. Note U.S. Application Serial No. 642,925, filed August 21, 1984, in this regard.

In addition to crystallizing sources of $SiO_2$, $Al_2O_3$ and $P_2O_5$ in the manner described in the Lok et al U.S. Patent No. 4,440,871, it may be possible to prepare the molecular sieves suitable for use in accordance with the present invention by other techniques. For example, it may be possible to prepare such materials by impregnating a silicon and aluminum containing zeolite with an appropriate phosphorus compound, followed by calcination under conditions sufficient to convert the impregnated phosphorus to the oxide form. Note U.S. Patent Nos. 3,894,104; 4,049,573; 4,086,287; and 4,128,592. It is also possible that aluminum phosphate materials could be combined with silica in the manner discussed in U.S. Application Serial No. 606,496, filed May 3, 1984.

Catalytic cracking units which are amenable to the process of this invention may operate at a temperature of 204 to 704°C (400°F to 1300°F) and under reduced, atmospheric or superatmospheric pressure. The catalytic cracking process may be operated batchwise or continuously. The catalytic cracking process can be either fixed bed, moving bed or fluidized bed and the hydrocarbon charge stock flow may be either concurrent or countercurrent to the conventional catalyst flow. The process of this invention is particularly applicable to the fluid catalytic cracking (FCC) process.

Further details regarding particular process parameters, such as conditions, feedstocks, etc., are provided in U.S. Patent Nos. 4, 309,279, 4,368,114 and 4,416,765.

In practicing the present cracking process, it may be desirable to incorporate the phosphorous containing crystalline material, and optional conventional cracking component, in another material resistant to the temperature and other conditions employed in the process. Such matrix materials include synthetic or naturally occurring substances as well as inorganic materials such as clay, silica and/or metal oxides. The materials may be in the form of gelatinous precipitates or gels including mixtures of silica and metal oxides. Naturally occurring clays which can be used include those of the montmorillonite and kaolin families, which families include the sub-bentonites and the kaolins commonly known as Dixie, McNamee-Geogia and Florida clays or others in which the main mineral constituent is halloysite, kaolinite, dickite, nacrite or anauxite. Such clays can be used in the raw state as originally mined or initially subjected to calcination, acid treatment or chemical modification.

Other matrix materials, such as alumina, silica-alumina, silica-magnesia, silica-zirconia, silica-thoria, silica-beryllia, silica-titania as well as ternary compositions, such as silica-alumina-thoria, silica-alumina-zirconia, silica-alumina-magnesia and silica-magnesia-zirconia may also be used. The matrix may be in the form of a cogel. The relative proportions of zeolite component, e.g., SAPO-37 made as taught in U.S. 4,440,871 and other catalytic cracking components, if any, and inorganic oxide gel matrix on an anhydrous basis may vary widely with the molecular sieve content ranging from between 1 to 99 percent by weight and more usually 5 to 80 percent by weight of the dry composite.

The cracking conditions are conventional and include a temperature of 300°C to 700°C, a pressure of from 0.1 atmosphere to 30 atmospheres and a weight hourly space velocity of 0.1 to 100.

The feedstock including the hydrocarbons to be cracked may include, in whole or in part, a gas oil (e.g., light, medium or heavy gas oil) having a boiling range falling within the range of 232 to 760°C (450°F to 1400°F).

Example 1

A solution was prepared by mixing 12.6 parts phosphoric acid (85% by weight), 13.4 parts distilled water and 7.5 parts alumina (Catapal SB). A second solution was prepared by combining 1.4 parts silica (Cab-O-Sil M-5), 1 part of an aqueous solution of tetramethylammonium hydroxide (25% by weight) and 52.7 parts of an aqueous solution of tetrapropylammonium hydroxide solution (40% by weight). These two solutions were then mixed with stirring until homogeneous. The combined mixture was then placed into an autoclave and heated to 200°C with constant stirring for 24 hours. The resultant product was then filtered, washed, and dried overnight at 121°C (250°F). An analyses of this material follows and is compared to that material prepared in Example 43 of U.S. Patent 4,440,871.

| Composition, Wt % | Present Example No.1 | U.S. 4,440,871 Example No.43 |
|---|---|---|
| N | 1.7 | 1.8 |
| C | 14.9 | 14.2 |
| $SiO_2$ | 9.7 | 9.2 |
| $Al_2O_3$ | 32.5 | 31.8 |
| $P_2O_5$ | 29.5 | 31.4 |
| Ash (1000°C) | 76.2 | 73.9 |

Adsorption, Wt % (all at room temperature)

| | Present Example No.1 | U.S. 4,440,871 Example No.43 |
|---|---|---|
| $H_2O$ | 35.2 (at 12 Torr) | 35.3 (at 4.6 Torr) |
| $C_y-C_6$ | 20.1 (at 20 Torr) | 23.2 (at 60 Torr) |
| $N-C_6$ | 18.2 (at 20 Torr) | – |

## Example 2

Solution A, containing 8.03 parts sodium silicate (28.7 wt% $SiO_2$, 8.9 wt% $Na_2O$, 62.4 wt% $H_2O$) and 26.2 parts water, was cooled to 4-7°C - (40-45°F) and mixed at 700-800 RPM with a Cowles mixer while slowly adding 0.6 parts of 100% $H_2SO_4$. Over the next 1/2 hour, solution B, containing 1 part aluminum sulfate (17.2 wt% $Al_2O_3$) and 7.50 parts water, was slowly added and the resulting gel was agitated at 700-800 RPM for 1/2 hour. A slurry containing 0.62 parts of the molecular sieve of Example 1 (100% solids basis) and 2.49 parts water was added to the gel and the resulting slurry was then mixed for one hour at 700-800 RPM. This material was then filtered on a Buchner funnel, reslurried to about 11% solids, homogenized and spray dried. The spray dried catalyst was then $NH_4NO_3$ exchanged, water washed and dried at 121°C (250°F) for at least 16 hours. The resulting catalyst contained 20% of the molecular sieve of Example 1 in a 93/7 (weight ratio) amorphous $SiO_2/Al_2O_3$ matrix.

## Example 3

The catalyst from Example 2 was steamed for 10 hours at 677°C (1250°F), atmospheric pressure with 45% steam and 55% air in a fluidized bed.

## Example 4

The catalyst from Example 3 was steamed for 10 hours, at 788°C (1450°F), atmospheric pressure with 45% steam and 55% air in a fluidized bed.

## Example 5

The fluid catalyst of this Example uses the exact procedure outlined in Example 2 but substitutes calcined REY in place of the molecular sieve of Example 1. The resulting catalyst contained 20% REY in a 93/7 (weight ratio) amorphous $SiO_2/Al_2O_3$ matrix.

## Example 6

A portion of the catalyst from Example 5 was steamed for 10 hours, at 677°C (1250°F), atmospheric pressure with 45% steam and 55% air in a fluidized bed.

## Example 7

A portion of the catalyst from Example 5 was steamed for 10 hours, at 788°C (1450°F), atmospheric pressure with 45% steam and 55% air in a fluidized bed.

Example 8

The catalysts of Examples 3, 4, 6 and 7 were evaluated in a fixed-fluidized bed unit at 516°C - (960°F), 1.75-5.0 C/O, 34-12 WHSV hr⁻¹ (weight hourly space velocity) using Joliet Sour Heavy Gas Oil (JSHGO) as feed.

The JSHGO feed had the properties set forth below:

Table 1

| Chargestock | JSHGO |
|---|---|
| Density g/cc | 0.908 |
| Gravity, °API | 24.3/77 |
| Aniline Pt., °F/°C | 171 |
| Sulfur, wt. % | 1.87 |
| Nitrogen, wt. % | 0.10 |
| Basic Nitrogen, ppm | 327 |
| Conradson Carbon, wt. % | 0.28 |
| Viscosity, KV at 99°C (210°F) | 3.6 |
| Bromine No. | 4.2 |
| R.I. at 21°C (70°F) | 1.5080 |
| Hydrogen, wt. % | 12.3 |
| Molecular Weight | 358 |
| Pour Point, °F/°C | 85/29.4 |
| Paraffins, wt. % | 23.5 |
| Naphthenes, wt. % | 32.0 |
| Aromatics, wt. % | 44.5 |
| CA, wt. % | 18.9 |

Comparisons of the REY (Examples 6 and 7) catalyst and present (Examples 3 and 4) catalyst results are given in Tables 2 and 3 for the 677°C - (1250°F) (70 volume percent conversion) and 788°C (1450°F) (55 volume percent conversion) steamings, respectively. At the 677°C (1250°F) steaming, the present catalyst gives a 4.2 RON+O improvement with only a 2.4 volume percent lower C₅+ gasoline yield relative to the REY catalyst. The present catalyst also gives higher C₃+C₄ olefins which when alkylated result in increased C₅+ gasoline + alkylate yields. Coke, HFO and LFO yields are roughly equivalent. Following the more severe steam deactivation at 788°C (1450°F), the present catalyst retains a 3.7 RON+O improvement relative to REY catalyst with only a 1.6 volume percent reduction in the C₅+ gasoline yield. Thus, the increased steaming severity appears to improve the selectivity of the present catalyst; octane gain per volume decrease in gasoline increased. In addition, following the more severe steaming, the present catalyst yielded 3.9 weight percent more LFO and 4.2 weight percent less HFO than the REY catalyst.

### Table 2

#### 70 Volume % Conversion Following
#### 10 hours, 677°C (1250°F), 45% steam/55% Air Treatment

| Yields | Example 6 | Example 3 | Delta |
|---|---|---|---|
| Conversion, % Vol | 70 | 70 | − |
| $C_5$+ Gasoline, % Vol | 55.5 | 53.1 | −2.4 |
| Total $C_4$'s, % Vol | 15.3 | 17.2 | +1.9 |
| Dry Gas, % wt | 7.8 | 8.8 | +1.0 |
| Coke, % wt | 4.6 | 4.3 | −0.3 |
| $H_2$, % wt | 0.02 | 0.03 | +0.01 |
| $C_2$, % wt | 0.5 | 0.5 | 0.0 |
| $C_2$=, % wt | 0.5 | 0.7 | +0.2 |
| $C_3$, % Vol | 2.6 | 2.8 | +0.2 |
| $C_3$=, % Vol | 6.7 | 8.1 | +1.4 |
| n-$C_4$, % Vol | 1.9 | 1.8 | −0.1 |
| i-$C_4$, % Vol | 7.4 | 8.5 | +1.1 |
| $C_4$=, % Vol | 6.0 | 6.9 | +0.9 |
| $C_5$+ Gasoline+Alkylate, % Vol | 77.3 | 78.2 | +0.9 |
| RON+O, $C_5$+ Gasoline | 86.6 | 90.8 | +4.2 |
| RON+O, $C_5$+ Gasoline +Alkylate | 88.6 | 91.8 | +3.2 |
| LFO, % wt | 27.5 | 26.5 | −1.0 |
| HFO, % wt | 4.9 | 5.8 | +0.9 |

### Table 3

#### 55 Volume % Conversion Following
#### 10 hours, 788°C (1450°F), 45% steam/55% Air Treatment

| Yields | Example 7 | Example 4 | Delta |
|---|---|---|---|
| Conversion, % Vol | 55 | 55 | − |
| $C_5$+ Gasoline, % Vol | 47.7 | 46.1 | −1.6 |
| Total $C_4$'s, % Vol | 10.1 | 11.4 | +1.3 |
| Dry Gas, % wt | 5.1 | 5.8 | +0.7 |
| Coke, % wt | 2.0 | 2.0 | 0.0 |
| $H_2$, % wt | 0.01 | 0.03 | +0.02 |
| $C_2$, % wt | 0.3 | 0.4 | +0.1 |
| $C_2$=, % wt | 0.4 | 0.4 | 0.0 |
| $C_3$, % Vol | 1.2 | 1.2 | 0.0 |
| $C_3$=, % Vol | 4.8 | 5.6 | +0.8 |
| n-$C_4$, % Vol | 1.2 | 0.9 | −0.3 |
| i-$C_4$, % Vol | 4.3 | 4.2 | −0.1 |
| $C_4$=, % Vol | 4.6 | 6.3 | +1.7 |
| $C_5$+ Gasoline+Alkylate, % Vol | 63.8 | 68.6 | +4.8 |
| RON+O, $C_5$+ Gasoline | 85.9 | 89.6 | +3.7 |
| RON+O, $C_5$+ Gasoline +Alkylate | 87.9 | 91.1 | +3.2 |
| LFO, % wt | 31.0 | 34.9 | +3.9 |
| HFO, % wt | 16.1 | 11.9 | −4.2 |

The foregoing Examples indicate that at constant conversion the present catalyst produces a gasoline with 3-5 higher RON+O (albeit at a 1-2 volume percent yield penalty) relative to the REY catalyst. This octane increase is also accompanied by higher yields of $C_3$ and $C_4$ olefins which, when alkylated, gives greater $C_5$+ gasoline + alkylate yields for the present catalyst. In addition, when steamed at conditions which simulate equilibration of REY in a commercial unit, the present catalyst yields about 4 volume percent more LFO than does REY suggesting a greater selectivity for bottoms cracking.

While the Examples and evaluations described above are for stand-alone cracking catalysts, the potential applications of the present catalyst include its use in the presence of other conventional active catalysts (such as REY, USY, HY, zeolite Beta, ZSM-5, amorphous catalysts, etc.) either as an additive or a composite catalyst. The amount of the present catalyst in the catalyst mixture or composite may be, e.g., from 0.01 to 50 weight percent, or, e.g., from 0.1 to 25 weight percent, based upon the total weight of the cracking catalyst present.

Examples 9 to 11, detailed below, illustrate the effect of the catalyst in accordance with the present invention when evaluated as an additive catalyst.

Example 9

A sample of Super-D, a commercially available fluid cracking catalyst manufactured by the Davison Division of W.R. Grace & Co., was steamed for 10 hours, at 788°C (1450°F), atmospheric pressure with 45 percent steam and 55 percent air in a fluidized bed.

Example 10

A portion of the steamed catalyst from Example 4 was combined with the catalyst of Example 9 in proportions to give a blend containing 4 weight percent of the molecular sieve from the Example 4 catalyst in Super-D.

Example 11

The catalysts of Examples 9 and 10 were evaluated in a fixed-fluidized bed unit at 516°C - (960°F), 1.75-5.0 c/o, 34-12 WHSV hr $^{-1}$ (weight hourly space velocity) using a Joliet Sour Heavy Gas Oil feed.

A comparison of the catalysts of Examples 9 and 10, given in Table 4, illustrate the effect of the Example 4 catalyst as an additive catalyst in the presence of an REY base catalyst.

## Table 4

### 70 Volume % Conversion Following

### 10 hours, 788°C (1450°F), 45% steam/55% Air Treatment

| Yields | Example 9 | Example 10 | Delta |
|---|---|---|---|
| Conversion, % Vol | 70 | 70 | – |
| $C_5+$ Gasoline, % Vol | 54.9 | 54.4 | -0.5 |
| Total $C_4$'s, % Vol | 15.8 | 16.0 | +0.2 |
| Dry Gas, % wt | 7.9 | 8.3 | +0.4 |
| Coke, % wt | 4.3 | 4.5 | +0.2 |
| $H_2$, % wt | 0.09 | 0.09 | 0.0 |
| $C_2$, % wt | 0.5 | 0.5 | 0.0 |
| $C_2=$, % wt | 0.6 | 0.6 | 0.0 |
| $C_3$, % Vol | 2.6 | 2.7 | +0.1 |
| $C_3=$, % Vol | 6.9 | 7.3 | +0.4 |
| $n-C_4$, % Vol | 1.6 | 2.0 | +0.4 |
| $i-C_4$, % Vol | 7.6 | 7.7 | +0.1 |
| $C_4=$, % Vol | 6.6 | 6.4 | -0.2 |
| $C_5+$ Gasoline+Alkylate, % Vol | 77.2 | 76.8 | -0.4 |
| RON+O, $C_5+$ Gasoline | 87.3 | 88.8 | +1.5 |
| RON+O, $C_5+$ Gasoline +Alkylate | 89.2 | 90.3 | +1.1 |
| LFO, % wt | 25.8 | 25.5 | -0.3 |
| HFO, % wt | 7.0 | 7.2 | +0.2 |

These results indicate that at constant conversion the addition of 4 weight percent of the molecular sieve from the Example 4 catalyst to Super-D gives a 1.5 RON+O increase with only a 0.5 volume percent lower $C_5+$ gasoline yield. The other major product yields appear unaffected by the Example 4 catalyst additive.

Since P is claimed to passivate V, the present phosphorus containing cracking catalysts would be expected to be highly resistant to metals poisoning.

Current trends in FCC indicate both increasing demand for gasoline octane and the need to process heavier feeds such as atmospheric and vacuum tower bottoms. Therefore, a metals tolerant catalyst which yields both increased octane and bottoms cracking could find widespread application throughout the industry.

As indicated by the foregoing examples, the beneficial effects of the present invention, e.g., in terms of improved octane number can be achieved without the addition of 'carbon-hydrogen fragmentation compounds' as additives to the feed. Such 'carbon-hydrogen fragmentation compounds' such as methanol are described in the Long et al U.S. Patent No. 4,512,875.

**Claims**

1. A process for catalytic cracking of hydrocarbons having a boiling range within the range of 232 to 760°C at a temperature of 300°C to 700°C, a pressure of from 0.1 atmosphere to 30 atmospheres and a weight hourly space velocity of from 0.1 to 100 using a cracking catalyst to produce a product stream comprising gasoline characterized by use of a catalyst of a microporous, crystalline material having a faujasite-type crystalline structure, the molecular sieve being prepared by crystallizing sources of $Al_2O_3$, $P_2O_5$ and $SiO_2$.

2. The process of claim 1 further characterized in that the catalyst consists of the faujasite-type crystalline material and at least one other conventional cracking catalyst.

3. The process of claim 1 or 2 further characterized in that the catalyst is in a matrix.

4. The process of any preceeding claim further characterized in that the crystalline material contains at least 1 percent Al atoms, at least 1 percent P atoms and at least 1 percent Si atoms based upon the total number of Al, P and Si atoms.

5. The process of claim 4, further characterized in that the number of Al atoms exceeds the number of Si atoms and the number of P atoms exceeds the number of Si atoms.

6. The process of any preceeding claim further characterized in that the crystalline material has an X-ray diffraction pattern which contains at least the lines set forth in Table XV.

7. The process of any preceeding claim 1 further characterized in that the gasoline produced has 3-5 higher RON+O than a gasoline produced by cracking the same feedstock at constant conversion over an analogous crystalline material having a faujasite-type structure and not containing phosphorus.

8. The process of any preceeding claim further characterized in that more of a bottoms portion of the feed is cracked in comparison with a cracking reaction with the same feedstock at constant conversion over an analogous crystalline material having a faujasite-type structure and not containing phosphorus.

9. The process according to any preceeding claim 1 wherein the cracking process is a fluidized catalytic cracking process.

10. The process of claim 2 further characterized in that the conventional catalyst is selected from the group of REY, USY, HY, zeolit Beta, ZSM-5 and an amorphous catalyst.

11. The process of claim 2 further characterized in that the crystalline material comprises from 0.01 to 50 weight percent of the entire weight of the catalytically active components.

12. The process of claim 2 further characterized in that the crystalline material is a separate additive composition comprising crystalline material which is added to the conventional cracking catalyst.

13. The process of claim 2 further characterized in that the crystalline material is composited with the conventional cracking catalyst.

14. The process of any preceeding claim wherein the crystalline material has a structure selected from the structures of SAPO-5, SAPO-11, SAPO-37 and SAPO-40, and the catalyst comprises at least one other conventional cracking catalyst.

15. The process of claim 14 wherein the crystalline material comprises 0.01 to 50 weight percent of the total catalytically active components.

| | **DOCUMENTS CONSIDERED TO BE RELEVANT** | | EP 86304201.6 |

| Category | Citation of document with indication, where appropriate, of relevant passages | Relevant to claim | CLASSIFICATION OF THE APPLICATION (Int. Cl.4) |
|---|---|---|---|
| A | US - A - 3 725 243 (R.H. HASS et al.)<br><br>* Claims; column 2, line 67 - column 8, line 8 *<br><br>-- | 1,2 | C 10 G 11/05 |
| A | GB - A - 1 496 181 (MOBIL OIL CORPORATION)<br><br>* Claims; page 1, line 7 - page 7, line 58 *<br><br>---- | 1-3 | |
| | | | **TECHNICAL FIELDS SEARCHED (Int. Cl.4)**<br><br>C 10 G 11/00 |

The present search report has been drawn up for all claims

| Place of search | Date of completion of the search | Examiner |
|---|---|---|
| VIENNA | 07-10-1986 | STÖCKLMAYER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82